# EUROPEAN PATENT APPLICATION

(11) **EP 4 458 635 A1**
(43) Date of publication of application: **06.11.2024**
(21) Application number: 22913618.9
(22) Date of filing: 08.10.2022
(51) Int. Cl.: B60W 50/00, B60W 60/00, H01R 24/68

(54) **VEHICLE CONTROLLER, VEHICLE, AND VEHICLE CONTROL METHOD**

(30) Priority: 29.12.2021 CN 202111641021; 29.12.2021 CN 202123382191 U
(71) Applicant: Ningbo Lotus Robotics Co., Ltd., Ningbo, Zhejiang 315335 (CN)
(72) Inventor: CHEN, Fei, Wuhan, Hubei 430056 (CN); WANG, Jun, Wuhan, Hubei 430056 (CN); YU, Yingjun, Wuhan, Hubei 430056 (CN); PAN, Jianwei, Wuhan, Hubei 430056 (CN); LI, Bo, Wuhan, Hubei 430056 (CN)
(74) Representative: Zaboliene, Reda
(86) International application number: PCT/CN2022/123928
(87) International publication number: WO 2023/124354

(57) **Abstract**

The present application provides a vehicle controller, a vehicle, and a vehicle control method, comprising : a substrate and at least one core computing processor board located on the substrate, the core computing processor board being used to provide corresponding computing power according to an autonomous driving scenario. The autonomous driving scenario comprises at least one of level L3 autonomous driving, level L4 autonomous driving, and level L5 autonomous driving. Both the substrate and each core computing processor board comprise a communication interface, the communication interface of the substrate and the communication interface of the core computing processor board being connected by means of a board-to-board connector. In this way, the vehicle controller is divided into two types of board layer structures, which are connected by means of a standardized interface of the board-to-board connector, so that the substrate can adapt to different core computing processor boards, thereby implementing flexible expansion of computing power. In addition, the number of core computing processor boards can be controlled to provide the required computing power for different autonomous driving scenarios, so that the vehicle controller can meet the requirements of different autonomous driving scenarios.

## Description

This application requires the Chinese patent application No. 202111641021.8, titled " VEHICLE CONTROLLER, VEHICLE, AND VEHICLE CONTROL METHOD", filed on December 29, 2021, and the Chinese Patent Application No. 202123382191.7, titled " VEHICLE CONTROLLER, AND VEHICLE ", the entire contents of which are incorporated in this application by reference.

### TECHNICAL FIELD

The present application relates to the technical field of automatic driving, and in particular to a vehicle controller, a vehicle and a vehicle control method.

### BACKGROUND

With the advent of autonomous driving, the complexity of the perception, control, and decision-making systems involved is higher, and there are more and more information interactions and controls with other systems on the body. Therefore, a domain controller system specifically positioned for autonomous driving has emerged as the times require. born. The autonomous driving domain controller needs to have the capabilities of multi-sensor fusion, positioning, path planning, decision-making control, wireless communication, and high-speed communication.

At present, specific autonomous driving domain controllers are mainly used to correspond to different levels of autonomous driving functions, which cannot realize the expansion of computing power, and thus cannot use the same platform to meet the needs of different autonomous driving scenes.

### INVENTION OVERVIEW

### TECHNICAL PROBLEM

### THE SOLUTION TO THE PROBLEM

### TECHNICAL SOLUTION

The present application provides a vehicle controller, a vehicle, and a vehicle control method, which are used to realize the expansion of computing power, so that the same platform can be used to meet the requirements of different automatic driving scenes.

In a first aspect, the present application provides a vehicle controller, including:
a substrate and at least one core computing processor board located on the substrate, wherein the core computing processor board is configured to provide corresponding computing power according to scene of automatic driving, and the scene of the automatic driving includes at least one of L3 level automatic driving, L4 level automatic driving and L5 level automatic driving;
both the substrate and each of the core computing processor boards include a communication interface, and the communication interface of the substrate and the communication interface of the core computing processor board are connected through a board-to-board connector.

Optionally, the communication interface includes one or more of a peripheral component interconnect express interface, a camera serial interface and a vehicle Ethernet interface.

Optionally, the substrate further includes a plurality of sensor interfaces.

Optionally, the sensor interface includes at least one of a camera interface, a millimeter wave radar interface, an ultrasonic radar interface and a laser radar interface.

Optionally, the board-to-board connector is a floating board-to-board connector.

In a second aspect, the present application also provides a vehicle controller, including:
a substrate and at least one core arithmetic processor board on the substrate, the substrate includes a microprocessor, the core arithmetic processor board includes a core arithmetic processor;
the substrate and each of the core computing processor boards include a plurality of communication interfaces, and the communication interface of the substrate and the communication interface of the core computing processor board are connected through board-to-board connectors.

Optionally, the communication interface includes one or more of a peripheral component interconnect express interface, a camera serial interface and a vehicle Ethernet interface.

Optionally, the substrate further includes a plurality of sensor interfaces.

Optionally, the sensor interface includes at least one of a camera interface, a millimeter-wave radar interface, an ultrasonic radar interface, and a laser radar interface.

Optionally, the plurality of sensor interfaces at least include: twelve camera interfaces, four laser radar interfaces, six millimeter-wave radar interfaces, and twelve ultrasonic radar interfaces.

Optionally, the vehicle controller includes two core arithmetic processor boards.

Optionally, the board-to-board connector is a floating board-to-board connector.

In a third aspect, the present application provides a vehicle, including: the vehicle controller in any possible design of the first aspect and the first aspect.

Optionally, the vehicle also includes:
a plurality of sensors connected to the vehicle controller.

Optionally, the sensor includes:
at least one of a camera, a millimeter-wave radar, an ultrasonic radar, and a laser radar.

In a fourth aspect, the present application provides a vehicle control method, the method is applied to a microprocessor, and the microprocessor is located on the substrate of the vehicle controller described in the first aspect and any possible design of the first aspect above, the method includes:
the microprocessor obtaining a road surface information data around a vehicle;
the microprocessor processing the road surface information data under the computing power provided by the core computing processor, to generate route information, and the route information is configured to indicate a driving route of the vehicle.

Optionally, the step of the microprocessor obtaining the road surface information data around the vehicle specifically includes:
the microprocessor obtaining data collected by a camera through gigabit multimedia serial link technology;
and/or obtaining a data collected by a laser radar through Gigabit Ethernet;
and/or obtaining a collected by a millimeter-wave radar via a controller area network with flexible data rates.

The vehicle controller provided by this application includes: a substrate and at least one core computing processor board located on the substrate, wherein the core computing processor board is configured to provide corresponding computing power according to scene of automatic driving, and the scene of the automatic driving comprises at least one of L3 level automatic driving, L4 level automatic driving and L5 level automatic driving; both the substrate and each of the core computing processor boards comprise a communication interface, and the communication interface of the substrate and the communication interface of the core computing processor board are connected through a board-to-board connector . In this way, the vehicle controller is divided into two board-layer structures, and the two board-layer structures are connected through the standardized interface of the board-to-board connector, so that the substrate can be adapted to different core computing processor boards, thereby realizing flexible expansion of computing power, and can provide the computing power required for different scenes of autonomous driving by controlling the number of core computing processor boards, so that the vehicle controller can meet the requirements of different autonomous driving scenes.

### BENEFICIAL EFFECTS OF INVENTION

### BRIEF DESCRIPTION OF THE DRAWINGS

### BRIEF DESCRIPTION OF THE DRAWINGS

In order to more clearly illustrate the technical solutions in this application or the prior art, the accompanying drawings that need to be used in the description of the embodiments or the prior art will be briefly introduced below. Obviously, the accompanying drawings in the following description are the present For some embodiments of the application, those skilled in the art can also obtain other drawings based on these drawings without creative work.
FIG. 1 is a schematic structural diagram of a vehicle controller provided by an embodiment of the present application.
FIG. 2 is a schematic structural diagram of a vehicle provided by an embodiment of the present application.
FIG. 3 is a schematic structural diagram of a vehicle provided by an embodiment of the present application.
FIG. 4 is a schematic structural diagram of a vehicle provided by an embodiment of the present application.
FIG. 5 is a flowchart of a vehicle control method provided by an embodiment of the present application.
FIG. 6 is a schematic structural diagram of an electronic device provided by an embodiment of the present application.

### The embodiment of the present application

In order to make the purpose, technical solutions and advantages of this application clearer, the technical solutions in this application will be clearly and completely described below in conjunction with the accompanying drawings in this application. Obviously, the described embodiments are part of the embodiments of this application , but not all examples. Based on the embodiments in this application, all other embodiments obtained by persons of ordinary skill in the art without making creative efforts belong to the scope of protection of this application.

Automated driving domain controller (Automated Driving Control Unit (ADCU) needs to have the capabilities of multi-sensor fusion, positioning, path planning, decision-making control, and high-speed communication. For example, the autonomous driving domain controller can be provided with various capabilities by connecting various types of sensors externally.

For different levels of autonomous driving functions, the type and number of sensors are different. At present, different levels of automatic driving functions are corresponding to specific autonomous driving domain controllers. Each specific autonomous driving domain controller has a specific core computing processor (System on Chip, SOC), and each core computing processor has a fixed computing power. As a result, the autonomous driving domain controller cannot adapt to different core computing processors, and cannot realize the expansion of computing power, so that the same platform cannot be used to meet the needs of different autonomous driving scenes.

And with the continuous development of SOA (Service-Oriented Architecture, Service-Oriented Architecture) and OTA (Over-the-Air Technology, over-the-air technology), user software function upgrades and expansion requirements continue to increase, making the fixed computing power of the automatic driving domain controller become a factor restricting the autonomous driving domain controller.

In view of the above problems, the present application proposes a vehicle controller, includes: a substrate and at least one core computing processor board located on the substrate, wherein the core computing processor board is configured to provide corresponding computing power according to scene of automatic driving, and the scene of the automatic driving comprises at least one of L3 level automatic driving, L4 level automatic driving and L5 level automatic driving; both the substrate and each of the core computing processor boards comprise a communication interface, and the communication interface of the substrate and the communication interface of the core computing processor board are connected through a board-to-board connector . In this way, the vehicle controller is divided into two board-layer structures, and the two board-layer structures are connected through the standardized interface of the board-to-board connector, so that the substrate can be adapted to different core computing processor boards, thereby realizing flexible expansion of computing power, and can provide the computing power required for different scenes of autonomous driving by controlling the number of core computing processor boards, so that the vehicle controller can meet the requirements of different autonomous driving scenes. Further, since the number of core computing processor boards is adjustable, the computing power of the vehicle controller is adjustable, thereby promoting the development of the vehicle controller.

The technical solution of the present application will be described in detail below with specific embodiments. The following specific embodiments may be combined with each other, and the same or similar concepts or processes may not be repeated in some embodiments.

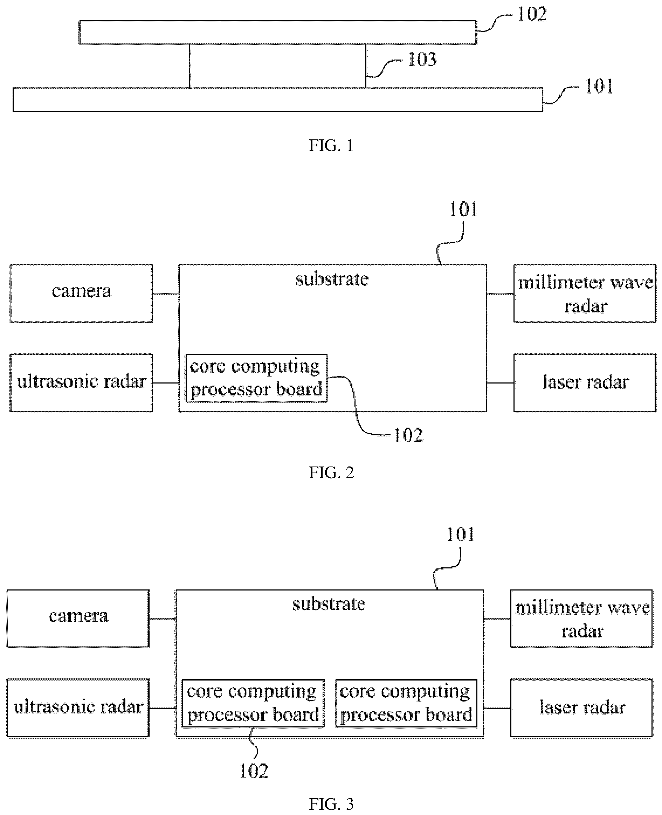

FIG. 1 shows a schematic structural diagram of a vehicle controller provided by an embodiment of the present application. As shown in FIG. 1, the vehicle controller of this embodiment includes: a substrate 101 and at least one core computing processor board 102 located on the substrate.

In one embodiment, the substrate 101 includes a microprocessor, and the core computing processor board 102 includes a core computing processor.

In one embodiment, the core computing processor board 102 is configured to provide corresponding computing power according to the scene of automatic driving, and the scene of automatic driving includes at least one of L3 automatic driving, L4 automatic driving and L5 level automatic driving;

Both the substrate 101 and each core computing processor board 101 include a communication interface, and the communication interface of the substrate 101 and the communication interface of the core computing processor board 102 are connected through a board-to-board connector 103. The vehicle controller is, for example, an autonomous driving domain controller. The vehicle controller is divided into a substrate 101 and a core operation computing board (SOC Board) 102. The substrate 101 can provide board-level power, and a safety microprocessor (safety Microcontroller unit) is designed on the substrate 101, the realization of automatic driving needs to rely on environmental perception sensors to collect road environment information, and transmit the collected data to the safety microprocessor for processing to identify obstacles, feasible roads, etc., and based on the recognition results, plan route, formulate vehicle speed, automatically control vehicle driving, etc.

Therefore, multiple external cameras, millimeter-wave radar, ultrasonic radar, laser radar and other devices can be connected to enable the safety processor to complete functions such as image recognition and data processing. Specifically, a plurality of sensor interfaces may be included on the substrate 101, and the sensor interfaces include at least one of a camera interface, a millimeter-wave radar interface, an ultrasonic radar interface, and a laser radar interface, so that the safety microprocessor communicates data with the camera through the camera interface. Interaction, data interaction with millimeter wave radar through millimeter wave radar interface, data interaction with ultrasonic radar through ultrasonic radar interface, data interaction with laser radar through laser radar interface. For example, it includes at least twelve camera interfaces, four laser radar interfaces, six millimeter-wave radar interfaces, and twelve ultrasonic radar interfaces, so that at least twelve cameras, four laser radar, and six millimeter-wave radar and twelve-way ultrasonic radar can be connected. It can also include two image interfaces to access two-way image display.

As an implementation, the safety microprocessor on the substrate 101 is connected to the camera through a camera interface, for example, a low voltage differential signal (Low Voltage Differential Signaling, LVDS) video coaxial cable connection. Low voltage differential signaling is a low-swing differential signal technology that enables signals to be transmitted at a rate of several hundred Mbps on differential PCB lines or balanced cables, and its low-voltage amplitude and low-current drive output can achieve low noise and low power consumption. Then, Gigabit Multimedia Serial Link (GMSL) technology can be used to interact and process data with the camera. The gigabit multimedia serial link is a transmission link composed of a serializer and a deserializer, and can simultaneously support data transmission of four cameras by using a four-channel deserializer of the gigabit multimedia serial link.

The ultrasonic radar interface on the substrate 101 may be a serial peripheral interface (Serial Peripheral Interface, SPI), so that the safety microprocessor performs data interaction and processing with the ultrasonic radar through the serial peripheral interface. The serial peripheral interface is a synchronous peripheral interface that enables the microcontroller to communicate with various peripheral devices in a serial manner to exchange information.

The millimeter wave radar interface on the substrate 101 may be a Vehicle Ethernet (Vehicle Ethernet) interface, so that the safety microprocessor adopts a controller area network (Controller Area Network with Flexible Data rate, CAN- FD) interact and process data with the millimeter wave radar. The controller LAN bus adopts two-wire serial communication protocol, based on non-destructive arbitration technology, distributed real-time control, reliable error handling and detection mechanism, so that the controller area network has high security, and a controller with flexible data rate has a flexible data rate based on the controller area network, providing greater bandwidth.

The laser radar interface on the substrate 101 may be a vehicle Ethernet interface, so that the safety microprocessor uses Gigabit Ethernet to interact and process data with the laser radar through the vehicle Ethernet interface. The Gigabit Ethernet has a transmission speed of 1000 megabits per second.

Due to the need to complete a large number of calculations, the autonomous driving domain controller needs to be matched with a processor with strong core computing power, which can provide support for different levels of computing power for autonomous driving, and the level of automatic driving is increased by one level, and the demand for computing power is increased by at least ten times. For example, the L2 level autonomous driving requires 2 TOPS computing power, the L3 level autonomous driving requires 24 TOPS computing power, the L4 level autonomous driving requires 320 TOPS computing power, and the L5 level autonomous driving requires more than 4,000 TOPS computing power. The L2 level autonomous driving refers to the automation of some functions. The basic operation is completed by the vehicle, and the driver is responsible for monitoring the surroundings and taking over the vehicle at any time. It mainly includes functions such as ACC (Adaptive Cruise Control) automatic cruise, automatic car following, and automatic parking. The L3 level autonomous driving refers to conditional automation. The vehicle can realize automatic acceleration and deceleration, steering, peripheral monitoring, etc. in a specific environment without the driver's operation. However, during the automatic driving process of the vehicle, the driver needs to be ready to take over the vehicle at any time. The system will prompt the driver to take over the vehicle. The L4 level autonomous driving refers to a high degree of automation. The system can perform all driving operations autonomously, and can go on the road completely autonomously. Drivers can do what they want in the car. The L5 level autonomous driving refers to complete automation. Under all conditions, the autonomous driving system can complete all driving tasks.

The current autonomous driving domain controller is limited by its own hardware design and structure, and usually integrates all functions on a single hardware board, which has low flexibility. For example, for the L2 level autonomous driving, a safety microprocessor and a core computing processor are designed on the substrate. The core computing processor provides the computing power required for the L2 level autonomous driving. Data interaction and processing with the camera through the link technology, data interaction and processing with the ultrasonic radar through the ultrasonic radar interface, data interaction and processing with the millimeter wave radar through the millimeter wave radar interface using a controller area network with flexible data rates.

However, the existing autonomous driving domain controllers cannot adapt to different core computing processors, and cannot realize the expansion of computing power, so that the same platform cannot be used to meet the needs of different autonomous driving scenes.

In the embodiment of the present application, at least one core computing processor board 102 is designed on the substrate 101. The core computing processor board 102 is configured to carry the core computing processor. By controlling the number of core computing processor boards 102 on the substrate 101, the core computing processor can provide corresponding computing power according to the scene of autonomous driving. The automatic driving scenario may include at least one of the L3 automatic driving, the L4 automatic driving and the L5 level automatic driving.

For the L3 level automatic driving, with reference to FIG. 2, one core computing processor board 102 can be designed on the substrate 101, the one core computing processor board 102 carries one core computing processor, to provide the L3 level automatic driving required for computing power microprocessor. The safety microprocessor on the substrate 101 interacts with data from the camera, the millimeter wave radar, the ultrasonic radar, laser radar and so on, and processing each received data under the support of the computing power provided by the core computing processor, so as to realize the L3 level automatic driving.

For the L4 level automatic driving, with reference to FIG. 3, two core computing processor boards 102 can be designed on the substrate 101, to provide the L4 level automatic driving required for computing power microprocessor. The safety microprocessor on the substrate 101 interacts with data from the camera, the millimeter wave radar, the ultrasonic radar, laser radar and so on, and processing each received data under the support of the computing power provided by the two core computing processors, so as to realize the L4 level automatic driving.

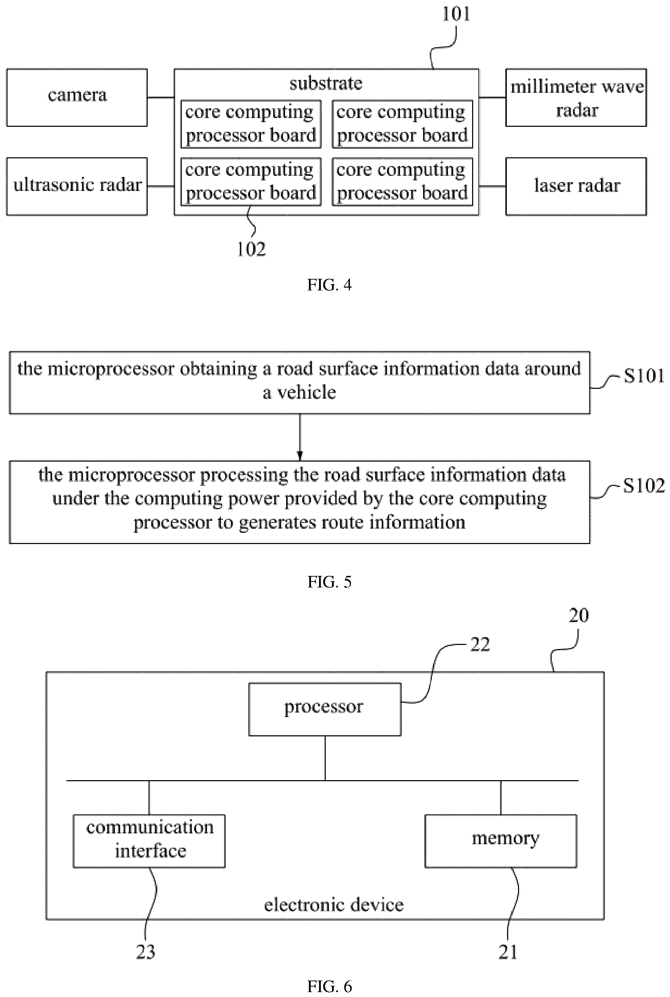

For the L5 level automatic driving, with reference to FIG. 4, three or more core computing processor boards 102 can be designed on the substrate 101, to provide the L5 level automatic driving required for computing power microprocessor. The safety microprocessor on the substrate 101 interacts with data from the camera, the millimeter wave radar, the ultrasonic radar, laser radar and so on, and processing each received data under the support of the computing power provided by a plurality of core computing processors, so as to realize the L5 level automatic driving.

In one embodiment, the substrate 101 and each core operation computing board 102 include multiple communication interfaces, and the communication interfaces may include a peripheral component interconnect express (peripheral component interconnect express, PCIE) interface, camera serial interface (Camera Serial Interface, CSI), vehicle Ethernet (Vehicle Ethernet) interface and other standardized interfaces to be compatible with different combinations and quantities of sensors for the L3 level-L5 level autonomous driving.

In one embodiment, the substrate 101 and the core computing processor board 102 perform data interaction through a communication interface, and the communication interface of the substrate 101 and the communication interface of the core computing processor board 102 are connected through a board-to-board connector 103. The board-to-board connector 103 can connect power and signals between boards to complete all connections. The board-to-board connector 103 can be, for example, a floating board-to-board connector. The floating board-to-the board connector is provided with the substrate is installed, absorption, correction + X, the plate-to-plate connector with the error function of +/- Y direction capable of eliminating the position deviation of the substrate real-mounting dislocation and the embedding, so that the board and the board are accurately aligned to enhance the shock resistance. In addition, the board-to-board connector 103 integrates a separate power pin, the maximum current of the single power pin can reach 3A, and supports a transmission rate of 8+Gbps.

The vehicle controller provided by this application includes: a substrate and at least one core computing processor board located on the substrate, wherein the core computing processor board is configured to provide corresponding computing power according to scene of automatic driving, and the scene of the automatic driving comprises at least one of L3 level automatic driving, L4 level automatic driving and L5 level automatic driving; both the substrate and each of the core computing processor boards comprise a communication interface, and the communication interface of the substrate and the communication interface of the core computing processor board are connected through a board-to-board connector . In this way, the vehicle controller is divided into two board-layer structures, and the two board-layer structures are connected through the standardized interface of the board-to-board connector, so that the substrate can be adapted to different core computing processor boards, thereby realizing flexible expansion of computing power, and can provide the computing power required for different scenes of autonomous driving by controlling the number of core computing processor boards, so that the vehicle controller can meet the requirements of different autonomous driving scenes.

An embodiment of the present application also provides a vehicle, including a vehicle controller.

The vehicle controller includes a substrate and at least one core computing processor board on the substrate. The core computing processor board provides corresponding computing power according to the scenes of autonomous driving. The scenes of autonomous driving include the L3 level automatic driving, the L4 level automatic driving and the L5 level autonomous driving, etc. Both the substrate and each core computing processor board include a communication interface, and the communication interface of the substrate and the communication interface of the core computing processor board are connected through the board-to-board connector.

In one embodiment, the vehicle further includes a plurality of sensor interfaces connected to the vehicle controller, and the plurality of sensor interfaces are used to connect external cameras, millimeter wave radar, ultrasonic radar, and laser radar, etc., so that the microcontroller in the vehicle controller can receive road environment information sent by sensors such as cameras, millimeter wave radars, ultrasonic radars, and laser radar, so that the vehicle controller has capabilities such as multi-sensor fusion, positioning, path planning, decision-making control, wireless communication, and high-speed communication. Thus, the vehicle controller controls the automatic driving of the vehicle.

The vehicle provided by this application includes a vehicle controller, the vehicle controller includes a substrate and at least one core computing processor on the substrate, and provides the computing power required for different scenes of automatic driving by controlling the number of core computing processor boards, so that the vehicle controller meets the needs of different autonomous driving scenes.

The embodiment of the present application also provides a vehicle control method, as shown in FIG. 5 , including:
S101. the microprocessor obtaining a road surface information data around a vehicle.

The microprocessor acquires road surface information data around the vehicle through an external camera, millimeter wave radar, ultrasonic radar, laser radar, etc.

S102. the microprocessor processing the road surface information data under the computing power provided by the core computing processor to generates route information.

After the microprocessor receives the road surface information data around the vehicle, it processes the road surface information data under the computing power provided by the core computing processor, identifies obstacles, feasible roads, etc., and generates route information based on the recognition results. The route information is configured to indicate the driving route of the vehicle, so that the vehicle automatically drives according to the driving route generated by the microprocessor.

As an implementation, the microprocessor obtains data from the camera via gigabit multimedia serial link technology, and/or obtains data from Laser radar via Gigabit Ethernet, and/or obtains data from Millimeter wave radar via a controller local area network with flexible data rates.

In the vehicle control method provided in this application, the microprocessor generates route information under the action of the computing power provided by the core computing processor to indicate the automatic driving of the vehicle. Since the number of core computing processors is adjustable, the vehicle can meet the requirements of different automatic driving scenes.

FIG. 6 shows a schematic diagram of a hardware structure of an electronic device provided by an embodiment of the present application. As shown in FIG. 6, the electronic device 20 is configured to implement operations corresponding to the electronic device in any of the above method embodiments. The electronic device 20 in this embodiment may include: a memory 21, a processor 22 and a communication interface 23.

The memory 21 is used for storing computer instructions. The memory 21 may include a high-speed random access memory (Random Access Memory, RAM), and may also include a non-volatile memory (Non-Volatile Memory, NVM), such as at least one disk storage, and may also be a U disk, a mobile hard disk, read-only memory, disk or CD-ROM, etc.

The processor 22 is configured to execute the computer instructions stored in the memory, so as to realize the vehicle control method in the above-mentioned embodiments. For details, refer to the related descriptions in the foregoing method embodiments. The processor 22 can be a central processing unit (Central Processing Unit, CPU), and can also be other general-purpose processors, digital signal processors (Digital Signal Processors, DSP), application specific integrated circuit (Application Specific Integrated Circuit, ASIC), etc. A general-purpose processor may be a microprocessor, or the processor may be any conventional processor, and the like. The steps of the method disclosed in conjunction with the invention can be directly implemented by a hardware processor, or implemented by a combination of hardware and software modules in the processor.

The communication interface 23 can be connected to the processor 212. The processor 22 can control the communication interface 23 to realize the functions of receiving and sending signals.

The electronic device provided in this embodiment can be used to execute the above-mentioned vehicle control method, and its implementation method and technical effect are similar, and will not be repeated in this embodiment.

The present application also provides a computer-readable storage medium, wherein computer instructions are stored in the computer-readable storage medium, and when the computer instructions are executed by a processor, they are used to implement the methods provided by the above-mentioned various implementations.

The present application also provides a computer program product, the computer program product includes computer instructions, and the computer instructions are stored in a computer-readable storage medium. At least one processor of the device may read the computer instructions from a computer-readable storage medium, and the at least one processor executes the computer instructions so that the device implements the methods provided in the foregoing various implementations.

The embodiment of the present application also provides a chip, the chip includes a memory and a processor, the memory is configured to store computer instructions, and the processor is configured to call and run the computer instructions from the memory, so that the device of the chip executes the methods described in the above various possible implementation manners.

Other embodiments of the present application will be readily apparent to those skilled in the art from consideration of the specification and practice of the invention disclosed herein. This application is intended to cover any modification, use or adaptation of the application, these modifications, uses or adaptations follow the general principles of the application and include common knowledge or conventional technical means in the technical field not disclosed in the application. The specification and examples are to be considered exemplary only, with the true scope and spirit of the application being indicated by the following claims.

Finally, it should be noted that the above embodiments are only used to illustrate the technical solution of the present application, rather than to limit it. Although the present application has been described in detail with reference to the foregoing embodiments, those skilled in the art should understand that: they can still modify the technical solutions described in the foregoing embodiments, or perform equivalent replacements for some or all of the technical features. However, these modifications or replacements do not make the essence of the corresponding technical solutions depart from the scope of the technical solutions of the embodiments of the present application.

## Claims

1. A vehicle controller, **characterized in that**, it comprises:
a substrate and at least one core computing processor board located on the substrate, wherein the core computing processor board is configured to provide corresponding computing power according to scene of automatic driving, and the scene of the automatic driving comprises at least one of L3 level automatic driving, L4 level automatic driving and L5 level automatic driving;
both the substrate and each of the core computing processor boards comprise a communication interface, and the communication interface of the substrate and the communication interface of the core computing processor board are connected through a board-to-board connector.

2. The vehicle controller according to claim **1, characterized in that**, the communication interface comprises one or more of a peripheral component interconnect express interface, a camera serial interface and a vehicle Ethernet interface.

3. The vehicle controller according to claim **1, characterized in that**, the substrate further comprises a plurality of sensor interfaces.

4. The vehicle controller according to claim **3, characterized in that**, the sensor interface comprises at least one of a camera interface, a millimeter wave radar interface, an ultrasonic radar interface and a laser radar interface.

5. The vehicle controller according to claim **4,** wherein the board-to-board connector is a floating board-to-board connector.

6. A vehicle controller, **characterized in that**, it comprises:
a substrate and at least one core arithmetic processor board on the substrate, the substrate comprises a microprocessor, the core arithmetic processor board comprises a core arithmetic processor;
the substrate and each of the core computing processor boards comprise a plurality of communication interfaces, and the communication interface of the substrate and the communication interface of the core computing processor board are connected through board-to-board connectors.

7. The vehicle controller according to claim **1, characterized in that**, the communication interface comprises one or more of a peripheral component interconnect express interface, a camera serial interface and a vehicle Ethernet interface.

8. The vehicle controller according to claim **1, characterized in that**, the substrate further comprises a plurality of sensor interfaces.

9. The vehicle controller according to claim **8, characterized in that**, the sensor interface comprises at least one of a camera interface, a millimeter wave radar interface, an ultrasonic radar interface and a laser radar interface.

10. The vehicle controller according to claim **9, characterized in that**, the sensor interface at least comprises twelve camera interfaces, four laser radar interfaces, six millimeter wave radar interfaces, twelve ultrasonic radar interface.

11. The vehicle controller according to claim **6, characterized in that**, the vehicle controller comprises two core arithmetic processor boards.

12. The vehicle controller according to claim **6, characterized in that**, the board-to-board connector is a floating board-to-board connector.

13. A vehicle, **characterized by** comprising: the vehicle controller according to any one of claims **1-12.**

14. The vehicle according to claim **13, characterized in that**, further comprises:
a plurality of sensors connected to the vehicle controller.

15. The vehicle according to claim **14, characterized in that**, the sensor comprises:
at least one of a camera, a millimeter-wave radar, an ultrasonic radar, and a laser radar.

16. A vehicle control method, **characterized in that**, the method is applied to a microprocessor, and the microprocessor is located on the substrate of the vehicle controller according to any one of claims **1-12,** the method comprises:
the microprocessor obtaining a road surface information data around a vehicle;
the microprocessor processing the road surface information data under the computing power provided by the core computing processor, to generate route information, and the route information is configured to indicate a driving route of the vehicle.

17. The method according to claim **16,** wherein the step of the microprocessor obtaining the road surface information data around the vehicle comprises:
the microprocessor obtaining data collected by a camera through gigabit multimedia serial link technology;
and/or obtaining a data collected by a laser radar through Gigabit Ethernet;
and/or obtaining a collected by a millimeter-wave radar via a controller area network with flexible data rates.
